# FASCICULE DE BREVET EUROPEEN

(11) **EP 1 365 903 B1**
(45) Date de publication et mention de la délivrance du brevet: **28.07.2004**
(21) Numéro de dépôt: 02706896.4
(22) Date de dépôt: 25.02.2002
(51) Int. Cl.: B29C 43/18

(54) **PROCEDE DE FABRICATION D'ASSEMBLAGES DE PIECES EN MATIERE PLASTIQUE**
VERFAHREN ZUR HERSTELLUNG VON KUNSTSTOFFTEILANORDNUNGEN
METHOD FOR PRODUCING PLASTIC ASSEMBLY PARTS

(30) Priorité: 26.02.2001 FR 0102574
(43) Date de publication de la demande: 03.12.2003
(73) Titulaire: CEBAL S.A.S., 92230 Gennevilliers (FR)
(72) Inventeur: BOSSHARDT, Michel, F-51800 Sainte-Ménéhould (FR); GRUAU, Bertrand, F-51800 Braux Sainte Cohière (FR)
(74) Mandataire: Fénot, Dominique
(86) Numéro de dépôt international: PCT/FR2002/000686
(87) Numéro de publication internationale: WO 2002/068171

(56) Documents cités:
- WO-A-97/46362
- BE-A- 551 112
- GB-A- 2 050 236
- US-A- 5 705 112

## Description

### DOMAINE TECHNIQUE

L'invention concerne un procédé permettant de fabriquer en grandes cadences des assemblages constitués d'au moins deux pièces en matière plastique mobiles l'une par rapport à l'autre et qui présentent des surfaces de contact de formes complémentaires de telle sorte qu'elles se trouvent dans au moins une configuration géométrique où elles sont solidaires entre elles sur une surface commune en un contact intime et sans jeu.

### ETAT DE LA TECHNIQUE

De tels assemblages se retrouvent dans une grande quantité d'objets, par exemple des objets comportant deux pièces solidarisées temporairement par vissage ou encliquetage, tels que des tubes souples munis de leurs bouchons ou, plus généralement, des têtes de récipient munies de leurs capsules de bouchage, ou des objets ayant des éléments en rotation relative l'un par rapport à l'autre, tels que des rotules d'articulation, des charnières, des couvercles ou dessus tournants perforés, ou encore des éléments glissants, tels que des pistons de seringue, des tiroirs pour boîtes de maquillage ou des fermetures à glissière.

Les pièces de certains de ces assemblages, notamment ceux qui ne concernent pas les rotules ou les charnières, sont en général fabriquées séparément puis assemblées. Les opérations de fabrication séparée des pièces nécessitent des machines spécifiques pour leur mise en forme puis leur transfert vers l'installation d'assemblage. Depuis longtemps, on a cherché à améliorer le prix de revient et la cadence de production de tels assemblages en essayant de mettre en forme les pièces dans un même cycle de fabrication sans avoir besoin de les assembler.

On connaît par DE 19 41 479, EP 0 073 356, US 3 281 295 , WO 91 01213, JP 61 047223 divers procédés de fabrication consistant à réaliser une première pièce à l'aide d'un moule en au moins deux parties, à enlever la deuxième partie du moule en conservant la pièce solidaire de la première partie du moule puis à surmouler par injection la deuxième pièce. On injecte ainsi une deuxième matière plastique dans un volume délimité d'une part par l'empreinte d'un nouveau moule venant s'appuyer contre la première pièce encore solidaire de la première partie du premier moule, d'autre part par une partie de la surface de la première pièce utilisée comme moule. La matière plastique de la deuxième pièce avait obligatoirement un point de fusion inférieur à celui de la première pièce. La demande WO 97/46362 de la demanderesse a proposé un procédé de la même catégorie mais mettant à profit certaines particularités géométriques des pièces à réaliser grâce auxquelles une telle contrainte sur la matière plastique n'était plus imposée.

On connaît par FR 2 451 867 un procédé de fabrication d'un tube souple comportant un goulot entourant un orifice de distribution et muni d'un bouchon caractérisé en ce qu'on utilise un tube souple dont la surface extérieure est recouverte d'une feuille métallique et dans lequel on emmanche ledit tube souple sur un poinçon qui sert d'appui et bouche l'orifice de distribution, on place une matrice femelle au regard dudit goulot qui joue le rôle d'une matrice mâle, on introduit de la résine plastique fondue dans la matrice femelle et on comprime ladite résine fondue dans l'empreinte constituée par la matrice femelle et le goulot.

### PROBLEME POSE

Les procédés décrits précédemment font appel, excepté le dernier, au surmoulage de la deuxième pièce de l'assemblage par injection. Ceci impose un choix assez limité pour la deuxième matière plastique: celle-ci doit avoir un melt index assez élevé pour pouvoir remplir dans des conditions satisfaisantes la cavité comprise entre le deuxième moule et la partie de surface de la première pièce servant de moule. Il est bien connu qu'à un melt index élevé sont associées des caractéristiques mécaniques assez faibles (caractéristiques instantanées et tenue à la fatigue) et surtout une assez grande sensibilité au stress cracking.

Le dernier procédé de l'art antérieur décrit dans la présente demande est un procédé de moulage par compression mais nécessite l'emploi d'un tube souple dont la surface extérieure est recouverte d'une feuille métallique.

La demanderesse a donc cherché à mettre au point un procédé de mise en forme de tels assemblages qui permette d'avoir les deux pièces entièrement en matière(s) plostique(s) et d'élargir l'éventail des possibilités de choix des matières plastiques de la deuxième pièce.

### OBJET DE L'INVENTION

L'objet selon l'invention est un procédé de fabrication d'objets ou de parties d'objets constituées par un assemblage comprenant au moins deux pièces en matières plastiques, mobiles l'une par rapport à l'autre avec au moins un degré de liberté et dont les surfaces respectives épousent - au moins partiellement - des formes complémentaires de telle sorte qu'elles se trouvent dans au moins un configuration géométrique où elles sont solidaires entre elles sur une surface commune en un contact intime et sans jeu, caractérisé en ce qu'il comprend les étapes suivantes:
a) moulage d'une première pièce en une ou plusieurs matières plastiques par injection ou compression résultant du rapprochement d'un premier outillage et d'un deuxième outillage dont l'empreinte comprend ladite surface commune, les empreintes réunies des deux outillages délimitant en fin de rapprochement le volume de la dite première pièce;
b) écartement dudit deuxième outillage, la première pièce restant solidaire avec ledit premier outillage qui joue ensuite le rôle d'un outillage d'appui;
c) réalisation d'une ébauche constituée d'une quantité déterminée d'une ou plusieurs matières thermoplastiques non miscibles avec ladite ou lesdites matières plastiques de la première pièce, ladite ébauche étant portée à une température supérieure à la température de ramollissement de ladite ou desdites matières thermoplastiques qui la constituent;
d) dépôt de ladite ébauche sur la surface de l'ensemble de la première pièce solidaire de l'outillage d'appui ou dans l'empreinte d'un troisième outillage de moulage;
e) mise en place dudit troisième outillage au regard de l'ensemble première pièce solidaire de l'outillage d'appui, ledit troisième outillage ayant une empreinte qui, lorsqu'il arrive en contact avec ledit ensemble première pièce solidaire de l'outillage d'appui, délimite avec la surface de la première pièce, et éventuellement une partie de l'empreinte de l'outillage d'appui, le volume de la deuxième pièce;
f) rapprochement desdits ensemble de la première pièce solidaire de l'outillage d'appui et troisième outillage jusqu'à ce qu'il arrivent en contact, ledit rapprochement se traduisant par la compression de l'ébauche jusqu'à obtention de la forme voulue de la deuxième pièce;
g) écartement de l'outillage d'appui et du troisième outillage puis extraction de l'ensemble des deux pièces ainsi formées.

L'étape a) correspond à un procédé de mise en forme classique, tel que le moulage par injection ou coinjection d'une ou plusieurs matières thermoplastiques ou le moulage par compression d'une matière thermoplastique ou thermodurcissable. L'un comme l'autre de ces procédés nécessite le rapprochement des premier et deuxième outillages, soit préalablement à l'injection soit au cours de la compression.

Après mise en forme, le deuxième outillage est écarté et la première pièce est soit extraite de l'ensemble soit maintenue en place sur le premier outillage.

Si la première pièce est extraite de l'ensemble des premier et deuxième outillage, pour suivre des étapes intermédiaires n'entrant pas dans le cadre de la présente invention, elle est ensuite réintroduite sur un outillage d'appui qui présente une surface de contact avec la première pièce mécaniquement équivalente à celle ayant existé entre le premier outillage et la première pièce. Elle est mise en place sur l'outillage d'appui de telle sorte qu'elle présente toujours ladite surface commune vers l'extérieur pour que cette dernière puisse jouer le rôle d'une partie d'empreinte de moule pour la deuxième pièce. La surface de contact est dite mécaniquement équivalente avec celle ayant existé avec le premier outillage en ce sens qu'il s'agit d'une surface apparente d'étendue semblable, de telle sorte que l'appui mécanique assuré par l'outillage d'appui soit identique à celui qui aurait pu être assuré par le premier outillage. Il ne s'agit donc pas nécessairement d'une surface réelle identique dans la mesure où la rugosité et les micro-aspérités ne jouent qu'un rôle minime dans les conditions d'appui.

Si la première pièce est maintenue en place sur le premier outillage, ce dernier est éventuellement refroidi pour accélérer le refroidissement de la première pièce et joue pour la suite du procédé un rôle d'outillage d'appui. En ce qui concerne la suite de la description des étapes du procédé selon l'invention, les termes "premier outillage" ou "outillage d'appui" sont synonymes.

La première pièce est donc mise en place sur son outillage d'appui. elle est destinée à servir partiellement de matrice pour la formation de la deuxième pièce. L'outillage d'appui peut également comporter une partie servant d'empreinte pour former une partie de la deuxième pièce située en dehors de la surface commune. Dans le cas où l'outillage d'appui est le premier outillage, cette partie d'empreinte doit être obturée au cours de la mise en forme de la première pièce. On peut par exemple effectuer un moulage par injection de la première pièce en obturant ladite partie d'empreinte du premier outillage avec le deuxième outillage.

On réalise d'autre part une ébauche de la deuxième pièce constituée d'une quantité déterminée d'une ou plusieurs matières thermoplastiques non miscibles avec la ou les matières plastiques de la première pièce. Il suffit que la ou les matières plastiques située à la périphérie de l'ébauche ne soient pas miscibles avec la ou les matières plastiques situées à la périphérie de la première pièce. La quantité de matière(s) plastique(s) est prédéterminée car l'ébauche doit avoir sensiblement le volume de la deuxième pièce. Elle peut être obtenue par exemple par extrusion ou co-extrusion, ce procédé permettant de contrôler de façon satisfaisante la quantité de matière constituant l'ébauche.

De préférence, la périphérie de la première pièce est en une première matière plastique et la périphérie de l'ébauche est en une seconde matière plastique, non miscible avec la première matière plastique. Les couples de matériaux destinés à entrer en contact et recommandés selon l'invention sont des thermoplastiques non miscibles entre eux. De préférence, nous choisirons des couples polypropylène - polyéthylène, polyester - polyéthylène, polyester - polypropylène, polyamide - polypropylène, polyamide - polyéthylène.

Dans une autre modalités de l'invention, l'ébauche est obtenue par coextrusion de plusieurs matières plastiques, la seconde matière plastique enveloppant une matière plastique ayant des propriétés barrières améliorées, telle qu'un copolymère (éthylène - alcool vinylique) EVOH, ou un polyamide

Une des matières plastiques obtenue par extrusion peut comporter une charge constituée typiquement de particules de carbonate de calcium, de mica ou encore de nanoparticules d'argiles telles que la montmorillonite.

On dépose ladite ébauche sur la surface de l'ensemble de la première pièce et de l'outillage d'appui faisant office d'empreinte de moulage ou dans l'empreinte d'un troisième outillage de moulage. De préférence, pour des raisons d'encombrement, ce dépôt est effectué avant l'amenée du troisième outillage au regard de l'ensemble première pièce solidaire de l'outillage d'appui. Le choix de l'endroit du dépôt dépend du dispositif de mise en oeuvre choisi. Si l'on choisit par exemple de réaliser l'ébauche par (co)extrusion, il est préférable de déplacer l'ensemble première pièce solidaire de l'outillage d'appui vers l'extrudeuse. On peut alors utiliser un système de prélèvement venant prendre une noix en matière(s) plastique(s) (co)extrudée de masse déterminée en sortie de filière et en venant la déposer par gravité sur l'outillage inférieur (ensemble première pièce et outillage d'appui dans notre exemple).

On amène le troisième outillage au regard de l'ensemble première pièce et premier outillage. Il s'agit bien sûr d'un mouvement relatif: selon le dispositif de mise en oeuvre choisi, on déplace soit les deuxième et troisième outillages soit l'ensemble premier outillage et première pièce. Ce troisième outillage présente une empreinte qui, lorsqu'il arrive en contact avec l'ensemble premier outillage et première pièce, délimite avec ladite surface de la première pièce le volume de la deuxième pièce. Eventuellement, une partie de l'empreinte ménagée dans le premier outillage et qui avait été obturée par le deuxième outillage lors de la mise en forme de la première pièce peut servir également à délimiter le volume de la deuxième pièce. Le rapprochement de l'outillage et de l'ensemble première pièce solidaire de l'outillage d'appui se traduit par une compression de l'ébauche emprisonnée dans l'entrefer compris entre l'empreinte du troisième outillage et la surface de l'ensemble première pièce solidaire de l'outillage d'appui qui fait office d'empreinte complémentaire et comprend la surface commune.

l'ébauche est comprimée jusqu'à obtention de la forme voulue de la deuxième pièce. On écarte ensuite l'outillage d'appui et le troisième outillages. L'ensemble des deux pièces ainsi formées peut être extrait directement ou rester solidaire de l'un des outillages pendant son refroidissement.

L'assemblage obtenu est dans la configuration géométrique décrite précédemment où lesdites pièces sont solidaires entre elles sur une surface commune en un contact intime et sans jeu. C'est avec cette surface commune que la première pièce fait office de matrice partielle. Ladite surface commune peut comporter des reliefs plus ou moins prononcés. Le terme "contact intime et sans jeu" n'implique pas une liaison continue au niveau des micro - aspérités mais définit une qualité de contact qui ne pourrait être obtenue autrement que dans des conditions économiquement peu satisfaisantes, en tout cas meilleure que celle qui serait obtenue par un usinage séparé et minutieux des pièces à mettre en contact. On peut estimer l'absence de jeu par une distance séparant le deux surfaces ne dépassant pas en moyenne 10 µm.

Une fois l'assemblage extrait, les pièces sont destinées à être désolidarisées, de préférence par l'utilisateur final lui-même: il faut dans ce cas que cette désolidarisation s'effectue dans des conditions acceptables avec un effort à fournir ni trop fort ni trop faible et sans arrachement ou création intempestive de reliefs irréguliers et aléatoires sur la surface commune de contact, celle-ci devant souvent être une surface de contact temporaire étanche.

La dernière phase de démoulage de la deuxième pièce consiste en un déplacement relatif d'une pièce ou d'une partie d'une pièce par rapport à l'autre: il suffit de déplacer chacune des parties de pièce qui se situe au voisinage de la surface commune de contact. Ce déplacement est effectué préférentiellement après stabilisation thermique et dimensionnelle complète, l'idéal étant de l'inclure dans une opération habituellement exécutée par l'utilisateur final. Encore faut-il qu'il n'ait pas à fournir d'effort supplémentaire.

On laisse de préférence refroidir l'ensemble ainsi formé et on attend la stabilisation complète des deux matières plastiques avant de déplacer une pièce relativement à l'autre. Ce déplacement constitue en quelque sorte la dernière phase de démoulage de la deuxième pièce. La deuxième pièce étant obtenue par compression d'une ébauche soumise à une température relativement basse, la stabilisation complète de l'ensemble est assez rapide. Ceci n'empêche pas d'effectuer des opérations de fabrication complémentaires avec l'ensemble de ces deux pièces, maintenues solidaires pendant cette période de refroidissement.

Ainsi, si les assemblages sont des tubes souples munis de leurs capsules, on peut les remplir avec le produit qu'ils sont destinés à contenir. La tête de tube munie de sa capsule à l'aide de ce procédé est soudée sur une jupe souple puis l'ensemble est retourné pour recevoir ledit produit sans qu'il y ait besoin d'attendre la stabilisation complète des matières plastiques. C'est l'utilisateur final qui effectuera lui-même la dernière phase de démoulage de la capsule en opérant le dévissage destiné à la première ouverture du tube.

Une variante du procédé particulier précédent consiste à réaliser le tube constitué d'une souple cylindrique et d'une tête, la tête étant moulée en tant que première pièce, par injection ou compression de matière(s) plastique(s) qui viennent se souder sur l'extrémité de la jupe du tube par soudure autogène au cours du moulage.

Une autre variante consiste à mouler un bouchon comme première pièce, à le mettre à l'intérieur d'une matrice faisant office d'outillage d'appui et à mettre au regard de cet ensemble un poinçon habillé d'une jupe dont l'extrémité déborde légèrement de l'épaule du poinçon. Le poinçon a une forme telle que lorsqu'il arrive au contact de la matrice munie du bouchon, la surface de son extrémité et celle de l'empreinte de la matrice munie du bouchon délimitent le volume de la tête de tube à réaliser. L'extrémité débordante de la jupe se trouve piégée dans ce volume. On dépose une ébauche dans l'entrefer compris entre le poinçon muni de sa jupe et la matrice munie du bouchon et on approche le poinçon et la matrice jusqu'à ce qu'ils arrivent en contact. La tête est ainsi obtenue par compression par moulage et est soudée de façon autogène à la jupe au cours dudit moulage.

La stabilisation complète des matières plastiques non miscibles peut entraîner, en raison des dilatations différentielles par exemple, une augmentation du couple de desserrage. Pour pallier à cette difficulté, deux solutions combinables ont été adoptées avec succès: on joue soit sur les matériaux constitutifs, soit sur la géométrie des surfaces, notamment des détails dont elles sont munies. Souvent les surfaces de contact complémentaires sont munies de moyens de solidarisation temporaire des deux pièces, tels que des filetages et l'on peut jouer sur leur forme: judicieusement dessinés, ces filetages peuvent participer efficacement au démoulage final de la deuxième pièce par désolidarisation des deux surfaces. Ce sont des filets rapides, multiples, coniques et peu profonds. Ils peuvent avoir une faible longueur et ne pas s'étendre sur la totalité de la surface commune de contact. De tels moyens constituent des aspérités ménagées sur la surface commune et leur géométrie doit être conçue de telle sorte qu'elles subissent une déformation minimum au cours de la compression. Leur géométrie sera détaillée dans les exemples qui suivent.

De manière générale et de façon surprenante, le surmoulage par compression tolère mieux la présence de reliefs ou d'aspérités sur la surface commune que le surmoulage par injection. On pouvait penser en effet qu'en raison de la température de travail en moyenne plus basse, les efforts mis en jeu au cours de la compression sont plus élevés, ce qui aurait dû se traduire par une plus forte déformation des aspérités ménagées sur la surface commune, entraînées par l'écoulement de la deuxième matière plastique. Or, il n'en est rien, du moins pour les géométries testées et décrites ci-après.

On a constaté en effet que des aspérités - réalisées sur la surface de la première pièce correspondant à la surface commune - relativement élancées (rapport hauteur/base pouvant atteindre 1) et possédant des angles assez vifs (congés de rayon voisin de 2/10 mm) conservaient parfaitement leur géométrie et leurs angles vifs après la compression de la deuxième pièce. Ceci est sans doute dû au fait que ces aspérités sont à une température plus faible et ont tendance à se déformer moins que la partie centrale de l'ébauche lors de la compression, et surtout au fait que l'entrefer existant entre ladite surface commune et le troisième outillage est, du début de la compression jusqu'au dernier moment où les outillages arrivent en contact, beaucoup plus large que l'entrefer rencontré par la matière plastique lorsqu'elle est injectée. Ceci se traduit par des cisaillements beaucoup moins intenses qu'en injection et c'est probablement la raison pour laquelle les aspérités sont relativement ménagées lors de la compression.

Un tel comportement est particulièrement avantageux lorsque l'on a à réaliser par surmoulage une deuxième pièce mince, ayant une épaisseur typiquement inférieure à 2 mm. Cela s'applique donc bien aux tubes souples munis de leur bouchon pour lesquels la deuxième pièce moulée peut être soit le bouchon, soit la tête de tube. Une autre bonne raison de la bonne tenue mécanique de la surface de la première pièce tient également dans ce cas au fait que ladite première pièce est également mince, (épaisseur inférieure à 2 mm) et qu'elle dispose donc d'un appui mécanique efficace.

Dans le cas où les surfaces qui s'appuient sur la surface commune ne peuvent pas porter des filetages, ou encore lorsque ces filetages doivent correspondre à des normes précises, il est possible de jouer sur l'une ou/et l'autre des matières plastiques en leur incorporant des agents glissants, tels que du stéarate de zinc.

Dans le but de diminuer l'effort de désolidarisation des deux pièces, on peut également jouer sur l'influence de la teneur en charges (mica, carbonate de calcium, kaolin, hydroxyde d'aluminium, etc...) d'une matière plastique sur son retrait: de manière générale, plus une matière plastique est chargée, moins elle a tendance au retrait. Celui-ci peut donc varier de quelques % (absence de charge) à 0%. Si l'on a la possibilité de faire varier ces teneurs, on peut donc soit augmenter le retrait (cas où la deuxième pièce surmoulée présente une surface convexe sur la surface commune) ou diminuer le retrait (cas où la deuxième pièce surmoulée présente une surface concave sur la surface commune).

En ce qui concerne les assemblages goulot - capsule, l'emploi de stéarate de zinc est peu recommandé dans les domaines pharmaceutique, parapharmaceutique ou cosmétique. Dans ce cas, on peut dessiner un système goulot - capsule démuni de filetage en donnant aux surfaces de contact du goulot et de la capsule des formes cylindriques mais à section orthogonale elliptique, le rapport du petit axe sur le grand axe devant rester supérieur à une valeur critique. En effet, en - dessous de cette valeur. on ne pourrait pas éviter une déformation plastique irréversible des surfaces. Dans le cas de bouchons en polypropylène moulés sur des goulots en polyéthylène, ces bouchons ayant un diamètre moyen compris entre 15 et 45 millimètres et une épaisseur de jupe comprise entre 0,5 et 2 millimètres, le rapport petit axe sur grand axe doit rester supérieur à 0,9.

Ce même principe peut être généralisé à d'autres géométries que celles des couples goulot - capsule: lorsque le déplacement relatif d'une pièce par rapport à l'autre admet un axe de rotation et que cet axe coïncide avec un axe de symétrie de la surface commune de contact, on peut s'arranger, lorsque cette rotation ne remplit pas un rôle fonctionnel spécifique et permanent de l'assemblage (cas de charnières ou de rotules), pour éviter que cet axe soit un axe d'axisymétrie: ainsi la rotation entraîne inévitablement une déformation élastique globale de ces pièces et cette déformation d'ensemble contribue à la désolidarisation des deux surfaces.

Les possibilités de réalisation sont multiples, le choix des matériaux des deux pièces et/ou de la géométrie de leur surface commune de contact permet dans la plupart des cas de pouvoir démouler la deuxième pièce de la première. Ce procédé permet d'obtenir une étanchéité remarquable, jusque-là non rencontrée sur des pièces fabriquées en grande cadence.

Une fois détachée, ladite deuxième pièce est destinée à être à nouveau assemblée avec la première pièce, tout en restant mobile par rapport à elle mais en ayant la possibilité de se trouver maintenue dans une position où leur contact s'appuie sur ladite surface commune.

D'autres caractéristiques et avantages apparaîtront dans la description des dispositifs particuliers de l'invention donnés ci-après à titre d'exemples nullement limitatifs.

La figure 1 représente, en coupe axiale, une tête de tube munie d'un bouchon surmoulé par compression, non munie de moyens de vissage.

La figure 2 représente, en coupe axiale, une tête de tube munie d'un bouchon surmoulé par compression muni d'un filet de vissage, ce dernier n'occupant que la base du goulot.

Les figures 3.1, 3.2 et 3.3 illustrent par des coupes axiales les étapes du procédé de fabrication selon l'invention employé pour la réalisation de la tête de tube de la figure 2 avec le filet de vissage non représenté.

Les figures 4.1 et 4.2 illustrent par des coupes axiales les étapes d'une autre variante du procédé de fabrication selon l'invention.

### EXEMPLES

Les exemples illustrent quelques variantes concernant la réalisation de tubes souples munis de leur bouchon. Ils peuvent concerner d'une façon plus générale, la réalisation de toute tête en matière plastique adaptable sur un récipient de forme et de matière quelconque, munie d'un orifice de distribution entouré par un goulot et bouché par une capsule. Dans tout le présent texte, les termes "bouchon", plutôt réservé aux tubes souples, et "capsule", plutôt réservé aux récipients, sont synonymes.

Habituellement, la capsule et la tête sont fabriquées séparément. Tôt ou tard, il est nécessaire de solidariser la capsule et la tête, ne serait-ce que pour protéger le produit contenu dans le récipient et empêcher qu'il n'en sorte. Cette sotidarisation est effectuée la première fois dans les conditions industrielles de fabrication du récipient ou de remplissage du produit. Le bouchage qui en résulte doit être maintenu hermétique avant la première utilisation. Les mêmes moyens de solidarisation doivent ensuite servir à plusieurs reprises tout au long de l'utilisation du produit.

Dans le cas des tubes souples fabriqués en grande série et à grande cadence, tels que ceux destinés à contenir et distribuer de la pâte dentifrice, le bouchon est vissé sur la tête en bout de chaîne de fabrication par l'intermédiaire de machines automatiques complexes. Ces machines amènent, au rythme de plusieurs centaines par minute, un bouchon devant chaque tête, ce dernier devant être muni d'un filetage parfaitement adapté à la tête qui lui fait face, puis mettent en rotation et en translation relatives la tête par rapport au bouchon. Cette opération de vissage automatique du bouchon nécessite l'investissement de machines automatiques complexes et entraîne une préparation particulière des pièces, leur contrôle dimensionnel et leur tri, de façon à limiter le taux de rebut.

Pour rendre moins coûteuse la première solidarisation du bouchon et de la tête, on a donc cherché à mouler directement le bouchon sur le goulot qui entoure l'orifice de distribution. La géométrie globale de la surface externe du goulot et de la surface interne de bouchon est cylindrique ou, de préférence, légèrement tronconique. En fonction des conditions d'emploi et de garantie de fermeture et d'étanchéité imposées au tube, le goulot est muni ou non de moyens de solidarisation temporaire.

Plusieurs couples tubes - bouchons peuvent être obtenus en mettant en oeuvre le procédé selon l'invention. Certains sont présentés dans les 3 premiers exemples. Le procédé est illustré pour la réalisation de tels tubes avec deux variantes possibles. Le détail des phases de la première variante est présenté dans l'exemple 3. L'exemple 4 expose l'autre variante.

Pour tous les exemples donnés ci-après et pour lesquels le bouchon ou la capsule est solidarisée au goulot par vissage, il est possible d'adapter les moules destinés au surmoulage direct du bouchon sur le goulot de façon à réaliser à la base de cette dernière une bande de garantie d'inviolabilité.

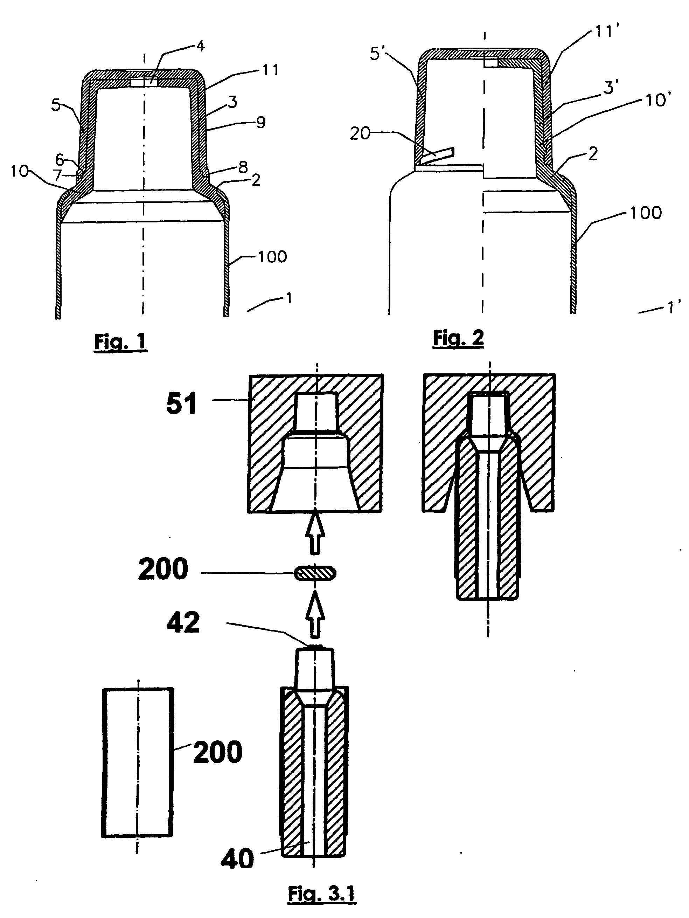

Un tel procédé permet de réaliser également les têtes de tubes illustrées dans les exemples 4 à 8 ( figures 2b, 5a, 5b, 6a, 6, 7a et 7b) de la demande WO97/46362.

### Exemple 1 : Tube avec bouchon surmoulé directement sur le goulot, non muni de moyens de vissage (Figure 1)

Dans ce premier exemple représenté sur la figure 1, le tube **1** est muni d'une tête **10** constituée d'une épaule **2** et d'un goulot **3** percé en son sommet d'un orifice de distribution **4.** Le goulot **3** ne comporte aucune aspérité et le bouchon **5** est surmoulé par compression directement sur la surface extérieure du goulot **3.** Le contact intime des surfaces du bouchon **5** et du goulot **3** sur la surface commune **11,** obtenu grâce au procédé selon l'invention, assure un maintien parfaitement étanche du bouchon **5** sur le goulot **3** pendant toute la durée d'utilisation du tube.

Le goulot et le bouchon sont dans cet exemple tronconiques avec un demi-angle au sommet compris entre 2° et 3° mais, pour faciliter le démoulage final du bouchon, il est possible également de leur donner une forme cylindrique à section orthogonale elliptique, le rapport petit axe/grand axe restant supérieur à 0,9.

Le simple contact du goulot **3** et du bouchon **5** sur leur surface commune **11** assure le maintien de l'ensemble, donc la fermeture de l'orifice dans des conditions satisfaisantes, mais, si l'on veut assurer une meilleure sécurité de fermeture, il suffit d'ajouter à la base du goulot **3** un épaulement **6**. Au cours du surmoulage par compression, l'angle supérieur de cet épaulement **6** flue, de telle sorte que sa paroi verticale **7** se met en légère contre-dépouille. De façon complémentaire, la face interne du bouchon va comporter à son extrémité **8** un relief interne qui, associé à la dite paroi en contre-dépouille de l'épaulement **7**, permet un encliquetage à peine perceptible du bouchage en fin d'enfoncement et fait obstacle au débouchage intempestif du bouchon, même après plusieurs utilisations.

Un tel tube, très simple, esthétique, est parfaitement adapté au conditionnement économique d'échantillons, pour lesquels un nombre limité de débouchages et rebouchages est prévu.

### Exemple 2 : Tête de tube avec bouchon surmoulé en une matière plastique enrichie de stéarate de zinc.

Dans ce deuxième exemple, le goulot porte un filet de vissage classiquement utilisé, constitué d'un filet unique de section trapézoïdale et en forme d'hélice de plus de 2 spires, en général 3 à 4 spires.

La capsule est dans ce cas surmoulée avec une matière plastique comprenant une charge d'agent glissant, tel que du stéarate de zinc. Le couple de dévissage au démoulage est important mais acceptable pour les bouchons qui facilitent la prise en main de l'utilisateur. Leur paroi externe est munie de moyens de préhension sans glissement, tels que des stries, et a un grand diamètre, ce qui donne un effet multiplicateur des efforts de dévissage. Si l'on peut s'écarter de la forme standard du filet, on préférera une section en demi-rond.

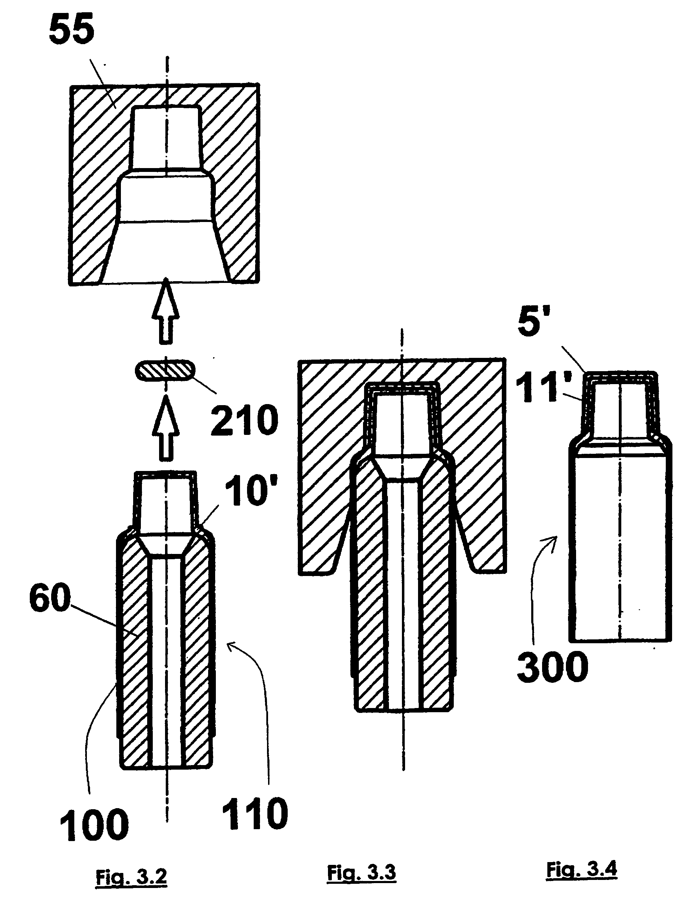

### Exemple 3: Tête de tube avec bouchon surmoulé muni des filets de vissage courts et peu profonds (Figures 2 et 3.1, 3.2 et 3.3)

Le troisième exemple permet de décrire avec l'aide des différentes étapes schématisées en figures 3.1, 3.2 et 3.3 le procédé selon l'invention appliqué à la tête de tube illustrée en figure 2.

La figure 3.1 représente le moulage par compression d'une tête de tube **10'** en polyéthylène basse densité sur une jupe **100** en matières thermoplastiques (il s'agit en l'occurrence d'un jupe multicouche avec une couche barrière). La jupe **100** est emmanchée autour d'un poinçon **40** qui fait office de premier outillage, son extrémité servant d'empreinte pour la réalisation de la paroi interne de la tête, c'est à dire la paroi interne du goulot **3'** et de l'épaule **2.** Le poinçon **40** est surmonté d'un appendice **42** qui se plaque contre l'outillage supérieur **51,** qui est le deuxième outillage, pour réaliser l'orifice **4.**

L' outillage supérieur **51** définit la surface extérieure du goulot **3'** et la surface extérieure de l'épaule **2.**

Une noix **200** de polyéthylène basse densité prélevée en sortie d'extrudeuse est déposée sur le sommet du poinçon. Elle est comprimée par rapprochement des premier et deuxième outillage jusqu'à obtention de la forme visée de la tête. L'extrémité de l'épaule **2** se soude intimement sur l'extrémité de la jupe **100** au cours de cette opération.

Le goulot **3'** ainsi formé est, dans cet exemple, muni à la base de sa paroi externe tronconique d'un filet de vissage **20** conique, court, multiple, rapide et de section particulière, caractérisée par une faible hauteur en relief: 0,3 mm. La pente de l'hélice est assez forte, entre 15 et 25°. La longueur angulaire du filet est de 30°seulement: on laisse la plus grande partie de la surface du goulot lisse, lui donnant ainsi un aspect propre, qui satisfait l'utilisateur autant sur le plan esthétique qu'hygiénique car il y a moins de risque de rétention du produit distribué par le tube.

Le deuxième outillage **51** est ensuite écarté et la tête **10'** est maintenue solidaire du poinçon **40.** Sans attendre le refroidissement complet de la tête, une nouvelle noix **210,** en polypropylène est prélevée en sortie d'extrudeuse et déposée sur la tête en polyéthylène formée au cours de l'étape précédente et encore solidaire du poinçon **40.**

Un troisième outillage **55** est mis en place au regard de l'ensemble tube muni de sa tête et poinçon, emprisonnant ainsi la noix **210** de polypropylène (cf. fig. 3.2). Lorsque le troisième outillage se rapproche et vient en appui sur l'ensemble tube - poinçon **110,** l'empreinte dudit troisième outillage **55,** la surface extérieure du goulot **3'** et l'appendice **42** du noyau **40** délimitent un volume de faible épaisseur occupé par le futur bouchon **5'**. Par ce procédé on peut économiser beaucoup de matière, puisque le bouchon peut être moitié plus mince que lorsqu'il est réalisé séparément. En l'occurrence, on réalise ici un bouchon de 0,7 mm d'épaisseur moyenne.

Par rapprochement des outillages (55, 3' et 52), on comprime la noix **210** en polypropylène jusqu'à obtention du bouchon **5'** (cf. fig. 3.3). Ce dernier se forme parfaitement, il possède à l'extrémité de sa jupe un filet de vissage complémentaire de celui **20** du goulot **3'.** Ce dernier est donc en creux, de faible profondeur (0,3 mm), à forte pente, et multiple: ceci facilite le centrage au cours de l'engagement du bouchon lors d'un rebouchage.

On écarte les outillages et on extrait l'ensemble (cf. fig. 3.4). On laisse refroidir l'ensemble de façon à ce qu'il y ait stabilisation dimensionnelle complète du goulot et du bouchon. Ceci n'empêche pas de manipuler l'ensemble ainsi formé, par exemple pour remplir le tube avec le produit qu'il est destiné à contenir et distribuer. C'est l'utilisateur final, qui réalise la dernière phase de démoulage du bouchon en effectuant la première ouverture, de façon classique et sans difficulté particulière car le couple de dévissage est faible.

Le contact intime des surfaces du bouchon **5'** et du goulot **3'** sur la surface commune **11'**, obtenu grâce au procédé selon l'invention, assure un maintien parfaitement étanche du bouchon **5'** sur le goulot **3'** pendant toute la durée d'utilisation du tube.

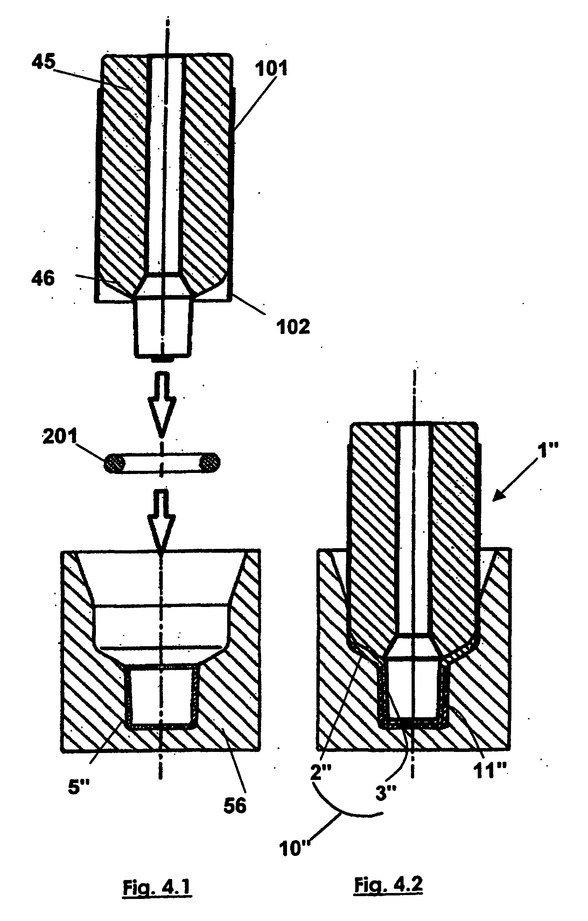

### Exemple 4: Procédé dit "intracompression", dans lequel la tête de tube est moulée par compression entre un poinçon et une matrice munie d'une capsule et soudée par soudure autogène à une extrémité de jupe emmanchée autour du poinçon (Figures 4.1 et 4.2)

Le procédé de cet exemple diffère du procédé de l'exemple précédent en ce qu'il nécessite moins d'étapes pour réaliser le tube souple. Dans cette variante, ce n'est pas le bouchon qui est réalisé en second mais la tête de tube elle-même.

Les figures 4.1 et 4.2 représentent la matrice **56** dans la cavité de laquelle un bouchon **5"** - faisant office de première pièce moulée - a été placé et le poinçon **45** sur lequel est emmanchée une jupe souple cylindrique **101**. L'extrémité **102** de la jupe **101** déborde légèrement de l'épaulement **46** ménagé sur le poinçon **40** qui fait office de troisième outillage.

Le bouchon **5"** a une épaisseur moyenne de 1 mm. La surface interne du bouchon, éventuellement munie d'un ou plusieurs filets de vissage, définit la surface extérieure du goulot à mettre en forme. La partie de l'empreinte de la matrice **56** non recouverte par le bouchon définit la surface extérieure de l'épaule. La matrice **56** fait office d'outillage d'appui, la forme de sa cavité étant, dans la partie où elle recueille le bouchon, identique à celle de l'empreinte de la matrice qui a servi à mouler ledit bouchon **5".**

Une ébauche torique **201** en polyéthylène basse densité prélevée en sortie d'extrudeuse est déposée dans la cavité de la matrice **56.** Elle est comprimée par rapprochement du poinçon et de la matrice jusqu'à obtention de la forme visée de la tête. Sous l'effet de cette translation l'ébauche **201** se déforme et l'écoulement de la matière plastique est guidé par les surfaces libres de l'entrefer qui diminue progressivement de volume. Lorsque le poinçon **45** et la matrice **56** sont accolés, ils définissent une cavité de moulage où l'extrémité **102** de la jupe est emprisonnée. Sous l'effet de la compression, la matière plastique de l'ébauche s'écoule et vient remplir les différentes parties du volume délimité par les empreintes du poinçon et de la matrice. Elle vient notamment au contact de l'extrémité **102** de la jupe. Les matières plastiques de la tête et de la jupe se soudent intimement entre elles sans autre apport de chaleur ou de matière. Elles restent soudées entre elles après un léger maintien sous pression et après refroidissement.

On écarte les outillages et on extrait l'ensemble. On laisse refroidir l'ensemble de façon à ce qu'il y ait stabilisation dimensionnelle complète du goulot et du bouchon.

Ce procédé, en particulier ses variantes décrites dans l'exemple 3 et l'exemple 4 peut avantageusement être mis en oeuvre à l'aide de dispositifs dans lesquels les divers outillages de moulage par compression sont animés d'un mouvement continu perpendiculairement à leur direction de rapprochement mutuel. Un moyen de transfert permettant de vêtir les poinçons avec une jupe souple y est décrit. Un moyen supplémentaire permet d'alimenter les matrices en bouchons. Ceux-ci, en général réalisés séparément, sont regroupés en vrac puis guidés individuellement dans un chenal qui débouche au droit du passage des matrices en mouvement continu et tombent par gravité dans la cavité des matrices.

### AVANTAGES

■ La pièce surmoulée obtenue par compression ne présente pas de marques liées à l'injection. En effet le procédé d'injection par canaux froids impose la présence de carottes qu'il faut enlever. Cette opération supplémentaire dans la chaîne de fabrication du tube est ainsi évitée: moindre coût et absence de traces sur le bouchon.
   L'injection peut également être effectuée pour les fabrications en grandes séries par canaux chauds. Ce procédé est plus complexe et plus coûteux et laisse des traces - certes plus discrètes que le procédé d'injection par canaux froids - sur le bouchon.
■ La compression présente un avantage sur l'injection: elle se prête mieux à la réalisation d'une chaîne de fabrication en cinématique continue où les capsules seraient fabriquées par compression de noix entre le tube solidaire d'un poinçon mobile et un troisième outillage également mobile, accompagnant le mouvement du poinçon dans un plan perpendiculaire à la direction dans laquelle les outillages se rapprochent. Plus généralement, les deuxièmes pièces peuvent être moulées en cinématique continue, par compression d'une ébauche en matière plastique extrudée entre la première pièce solidaire du premier outillage et un troisième outillage également mobile, l'ensemble première pièce solidaire de l'outillage d'appui et troisième outillage étant animés d'un mouvement continu perpendiculairement à leur direction de rapprochement mutuel
■ L'ébauche étant introduite dans l'entrefer entre l'ensemble premier outillage - première pièce et le troisième outillage à une température plus faible que celle utilisée pour l'injection, l'ensemble obtenu est globalement à une température moins élevée, ce qui diminue les durées de refroidissement.
■ L'injection impose la présence de canaux d'alimentation en matière plastique qui ont un diamètre minimum pour pouvoir vaincre la perte de charge sans dépenser trop d'énergie: ceci impose une épaisseur minimale à la pièce injectée. Avec la compression, on peut obtenir des pièces plus minces, donc plus légères. Il en résulte une économie de matière.

## Revendications

1. Procédé de fabrication d'objets ou de parties d'objets constituées par un assemblage comprenant au moins deux pièces en matières plastiques(10 et 5; 10' et 5'), mobiles l'une par rapport à l'autre avec au moins un degré de liberté et dont les surfaces respectives épousent - au moins partiellement - des formes complémentaires de telle sorte qu'elles se trouvent dans au moins une configuration géométrique où elles sont solidaires entre elles sur une surface commune (11; 11') en un contact intime et sans jeu, comprenant les étapes suivantes:
a) moulage d'une première pièce (10, 10') en une ou plusieurs matières plastiques par injection ou compression résultant du rapprochement d'un premier outillage (40) et d'un deuxième outillage (51) dont l'empreinte comprend ladite surface commune (11; 11'), les empreintes réunies des deux outillages délimitant en fin de rapprochement le volume de la dite première pièce;
b) écartement dudit deuxième outillage, la première pièce (10, 10') restant solidaire avec ledit premier outillage (40) qui joue ensuite le rôle d'un outillage d'appui (60);
c) réalisation d'une ébauche (210) constituée d'une quantité déterminée d'une ou plusieurs matières thermoplastiques, la ou les matières plastiques occupant la périphérie de l'ébauche n'étant pas miscibles avec la ou les matières plastiques occupant la périphérie de la première pièce, ladite ébauche étant à une température supérieure à la température de ramollissement de la ou des matières thermoplastiques qui la constituent;
d) dépôt de ladite ébauche sur la surface de l'ensemble (110) de la première pièce solidaire de l'outillage d'appui (60) ou dans l'empreinte d'un troisième outillage de moulage (55);
e) mise en place dudit troisième outillage de moulage (55) au regard de l'ensemble (110) de la première pièce solidaire de l'outillage d'appui, ledit troisième outillage ayant une empreinte qui, lorsqu'il arrive en contact avec ledit ensemble première pièce solidaire de l'outillage d'appui, délimite avec ladite surface de la première pièce, et éventuellement une partie de l'empreinte ménagée dans l'outillage d'appui, le volume de la deuxième pièce;
f) rapprochement desdits ensemble (110) de la première pièce solidaire de l'outillage d'appui et troisième outillage (55) jusqu'à ce qu'il arrivent en contact, ledit rapprochement se traduisant par la compression de l'ébauche (210) jusqu'à obtention de la forme voulue de la deuxième pièce;
g) écartement de l'outillage d'appui (60) et du troisième outillage (55) et extraction de l'ensemble (300) des deux pièces ainsi formées.

2. Procédé selon la revendication 1 modifié en ce que l'étape b) est remplacée par les étapes suivantes:
b1) écartement dudit premier outillage et dudit deuxième outillage et extraction de la première pièce (5");
b2) mise en place de la première pièce (5") sur un outillage d'appui (56) qui présente une surface de contact (11") avec la première pièce mécaniquement équivalente à celle ayant existé entre le premier outillage et la première pièce, la mise en place sur l'outillage d'appui étant effectuée de telle sorte que la première pièce présente ladite surface commune vers l'extérieur pour que cette dernière puisse jouer le rôle de moule moulant une partie de la deuxième pièce;

3. Procédé selon la revendication 1 ou 2, étant complété par l'étape finale suivante:
h) refroidissement et stabilisation complète des deux matières plastiques avant la dernière phase de démoulage de la deuxième pièce (5;5'; 10") qui consiste en un déplacement relatif d'une pièce (5;5'; 5") ou d'une partie d'une pièce par rapport à l'autre (10; 10'; 10")

4. Procédé selon l'une quelconque des revendications 1 à 3 dans lequel la périphérie de la première pièce est en une première matière plastique et la périphérie de l'ébauche est en une seconde matière plastique, non miscible avec la première matière plastique.

5. Procédé selon la revendication 4 dans lequel le couple des première et deuxième matières plastiques appartient au couple de matériaux choisi parmi les couples suivants: polypropylène - polyéthylène, polyester - polyéthylène, polyester - polypropylène, polyamide - polypropylène, polyamide - polyéthylène.

6. Procédé selon l'une quelconque des revendications 1 à 5 dans lequel la première pièce est moulée en une seule matière qui est la première matière plastique.

7. Procédé selon l'une quelconque des revendications 1 à 6 dans lequel l'ébauche est extrudée en une seule matière qui est la deuxième matière plastique.

8. Procédé selon l'une quelconque des revendications 1 à 6 dans lequel l'ébauche est obtenue par coextrusion de plusieurs matières plastiques, la seconde matière plastique enveloppant une matière plastiques ayant des propriétés barrières améliorées, telle qu'un copolymère (éthylène - alcool vinylique) EVOH ou un polyamide.

9. Procédé selon l'une quelconque des revendications 1 à 8 dans lequel l'une au moins des matières plastiques comporte un charge constituée typiquement de particules de carbonate de calcium, de mica ou encore de nanoparticules d'argiles telles que la montmorillonite.

10. Procédé selon l'une quelconque des revendications 1 à 9 dans lequel la première ou la deuxième matière plastique comprend un agent glissant.

11. Procédé selon l'une quelconque des revendications 1 à 10 dans lequel la première pièce est une tête de tube (10, 10') et la deuxième pièce est un bouchon (5, 5').

12. Procédé selon l'une quelconque des revendications 1 à 10 dans lequel la première pièce est un bouchon (5") de tube et la deuxième pièce est une tête de tube (10"), le troisième outillage (45) étant un poinçon autour duquel est emmanchée une jupe souple (101) dont l'extrémité (102) déborde dans la cavité de moulage de telle sorte que les matières plastiques de la tête et de la jupe se soudent intimement entre elles sans autre apport de chaleur ou de matière.

13. Procédé selon l'une quelconque des revendications 1 à 12 dans lequel les deuxièmes pièces sont moulées en cinématique continue, par compression d'une ébauche entre un ensemble mobile comprenant la première pièce solidaire de l'outillage d'appui et un troisième outillage également mobile, lesdits outillages de moulage étant animés d'un mouvement continu perpendiculairement à leur direction de rapprochement mutuel.

## Patentansprüche

1. Verfahren zur Herstellung von Gegenständen oder Teilen von Gegenständen bestehend aus einer Anordnung mit mindestens zwei Kunststoffteilen (10 und 5; 10' und 5'), die wenigstens mit einem Freiheitsgrad zueinander beweglich sind und deren jeweilige Oberflächen zumindest teilweise eng an komplementären Formen anliegen, derart, dass sie sich in mindestens einer geometrischen Konfiguration befinden, in der sie auf einer gemeinsamen Fläche (11; 11') in engem Kontakt und spielfrei fest miteinander verbunden sind, mit folgenden Schritten:
a) Spritz- oder Pressgießen eines ersten Teils (10, 10') aus einem oder mehreren Kunststoffen, resultierend aus dem Gegeneinanderbewegen eines ersten Werkzeuges (40) und eines zweiten Werkzeuges (51), dessen Hohlraum die gemeinsame Fläche (11; 11') beinhaltet, wobei die zusammengefügten Hohlräume der beiden Werkzeuge nach dem Gegeneinanderbewegen das Volumen des ersten Kunststoffteils begrenzen;
b) Wegrücken des zweiten Werkzeuges, wobei das erste Kunststoffteil (10, 10') mit dem ersten Werkzeug (40), das anschließend als Stützwerkzeug (60) dient, verbunden bleibt;
c) Herstellen eines Vormaterials (210) bestehend aus einer bestimmten Menge eines oder mehrerer thermoplastischer Kunststoffe, wobei der oder die Kunststoffe, die den Randbereich des Vormaterials einnehmen, nicht mit dem oder den Kunststoffen mischbar ist, die den Randbereich des ersten Kunststoffteils einnehmen, und das Vormaterial eine Temperatur hat, die höher ist als die Erweichungstemperatur des oder der thermoplastischen Kunststoffe, aus denen es besteht;
d) Aufbringen des Vormaterials auf die Oberfläche der mit dem Stützwerkzeug (60) verbundenen ersten Kunststoffteil-Anordnung (110) oder Einbringen in den Hohlraum eines dritten Gießwerkzeuges (55);
e) Positionieren des dritten Gießwerkzeuges (55) vor die mit dem Stützwerkzeug verbundene erste Kunststoffteil-Anordnung (110), wobei das dritte Werkzeug einen Hohlraum hat, der, wenn er mit dieser mit dem Stützwerkzeug verbundenen ersten Kunststoffteil-Anordnung in Kontakt kommt, mit der Oberfläche des ersten Kunststoffteils und eventuell einem Teil des im Stützwerkzeug ausgebildeten Hohlraums das Volumen des zweiten Kunststoffteils begrenzt;
f) Gegeneinanderbewegen der mit dem Stützwerkzeug verbundenen ersten Kunststoffteil-Anordnung (110) und des dritten Werkzeuges (55), bis sie miteinander in Kontakt kommen, wobei dieses Gegeneinanderbewegen die Kompression des Vormaterials (210) bewirkt, bis die gewünschte Form des zweiten Kunststoffteils erreicht ist;
g) Wegrücken des Stützwerkzeuges (60) und des dritten Werkzeuges (55) und Entnahme der Anordnung (300) mit den beiden so ausgeformten Kunststoffteilen.

2. Verfahren nach Anspruch 1, dadurch modifiziert, dass der Schritt b) durch folgende Schritte ersetzt wird:
b1) Wegrücken des ersten Werkzeuges und des zweiten Werkzeuges und Entnahme des ersten Kunststoffteils (5");
b2) Aufsetzen des ersten Kunststoffteils (5") auf ein Stützwerkzeug (56), das eine Kontaktfläche (11") mit dem ersten Kunststoffteil aufweist, die mechanisch derjenigen entspricht, die zwischen dem ersten Werkzeug und dem ersten Kunststoffteil vorlag, wobei das Aufsetzen auf das Stützwerkzeug so erfolgt, dass das erste Kunststoffteil die gemeinsame Fläche nach außen gerichtet aufweist, damit letztere als Form zum Ausformen eines Teils des zweiten Kunststoffteils dienen kann.

3. Verfahren nach Anspruch 1 oder 2, ergänzt durch folgenden Endschritt:
h) Abkühlung und vollständige Stabilisierung der beiden Kunststoffe vor der abschließenden Entformungsphase des zweiten Kunststoffteils (5; 5'; 10), die in einer Relativbewegung eines Kunststoffteils (5; 5'; 5") oder eines Teils eines Kunststoffteils zum anderen (10; 10'; 10") besteht.

4. Verfahren nach irgendeinem der Ansprüche 1 bis 3, bei dem der Randbereich des ersten Kunststoffteils aus einem ersten Kunststoff und der Randbereich des Vormaterials aus einem zweiten Kunststoff besteht, der mit dem ersten Kunststoff nicht mischbar ist.

5. Verfahren nach Anspruch 4, bei dem das Paar erster und zweiter Kunststoff dem unter den folgenden Paaren gewählten Werkstoffpaar angehört: Polypropylen - Polyethylen, Polyester - Polyethylen, Polyester - Polypropylen, Polyamid - Polypropylen, Polyamid - Polyethylen.

6. Verfahren nach irgendeinem der Ansprüche 1 bis 5, bei dem das erste Teil aus einem einzigen Material gegossen wird, bei dem es sich um den ersten Kunststoff handelt.

7. Verfahren nach irgendeinem der Ansprüche 1 bis 6, bei dem das Vormaterial aus einem einzigen Material extrudiert wird, bei dem es sich um den zweiten Kunststoff handelt.

8. Verfahren nach irgendeinem der Ansprüche 1 bis 6, bei dem das Vormaterial durch Koextrudieren mehrerer Kunststoffe gewonnen wird, wobei der zweite Kunststoff einen Kunststoff mit verbesserten Barriereeigenschaften umgibt, z. B. ein EVOH-Copolymer (EthylenVinylalkohol) oder ein Polyamid.

9. Verfahren nach irgendeinem der Ansprüche 1 bis 8, bei dem mindestens einer der Kunststoffe einen Füllstoff enthält, der typischerweise aus Kalziumcarbonatteilchen, Glimmerteilchen oder auch nanogroßen Tonteilchen wie Montmorillonit besteht.

10. Verfahren nach irgendeinem der Ansprüche 1 bis 9, bei dem der erste oder der zweite Kunststoff ein Gleitmittel enthält.

11. Verfahren nach irgendeinem der Ansprüche 1 bis 10, bei dem das erste Kunststoffteil ein Tubenkopf (10, 10') und das zweite Kunststoffteil ein Verschluss (5, 5') ist.

12. Verfahren nach irgendeinem der Ansprüche 1 bis 10, bei dem das erste Kunststoffteil ein Tubenverschluss (5") und das zweite Kunststoffteil ein Tubenkopf (10") ist, wobei das dritte Werkzeug (45) ein Stempel ist, um den herum ein weicher Mantel (101) aufgezogen ist, dessen Ende (102) in den Gießhohlraum hineinreicht, derart, dass sich die Kunststoffe des Kopfund Mantelteils ohne weitere Wärme- oder Stoffeinbringung eng miteinander verschweißen.

13. Verfahren nach irgendeinem der Ansprüche 1 bis 12, bei dem die zweiten Kunststoffteile in kontinuierlichen Bewegungsvorgängen durch Komprimieren eines Vormaterials zwischen einer beweglichen Anordnung, welche das mit dem Stützwerkzeug verbundene erste Kunststoffteil aufweist, und einem ebenfalls beweglichen dritten Werkzeug gegossen werden, wobei die Gießwerkzeuge quer zu ihrer beiderseitigen Gegeneinanderbewegungsrichtung stetig bewegt werden.

## Claims

1. Method for the fabrication of objects or parts of objects consisting of an assembly comprising at least two parts made of plastic materials (10 and 5; 10' and 5') which can move in relation to one another, with at least one degree of freedom and for which the corresponding surfaces match (at least partially) with complementary shapes such that there is at least one geometric configuration in which they are solidly interconnected on a common surface (11; 11') in close, clearance-free contact, comprising the following steps:
a) injection or compression moulding of a first part (10, 10') made of one or more plastic materials by bringing a first tool (40) and a second tool (51) towards each other, the impression of the second tool including the said common surface (11, 11'), the combined impressions of the two tools delimiting the volume of the said first part at the end of the closing movement;
b) separation of the said second tool, the first part (10, 10') being fixed with the said first tool (40) that then acts as a support tool (60);
c) production of a blank (210) consisting of a determined quantity of one or more thermoplastic materials, the plastic material(s) surrounding the periphery of the blank being immiscible with the plastic material(s) surrounding the periphery of the first part, the said blank being at a temperature higher than the softening temperature of the said thermoplastic material(s) from which it is made;
d) deposition of the said blank on the surface of the assembly (110) of the first part fixed to the support tool (60) or in the impression of a third moulding tool (55);
e) placement of the said third moulding tool (55) facing the assembly (110) of the first part fixed to the support tool, the said third tool having an impression that, when it comes into contact with the said assembly of the first part fixed to the support tool, delimits the volume of the second part with the said surface of the first part, and possibly a portion of the impression formed in the support tool;
f) the said assembly (110) of the first fixed part of the support tool and the third tool (55) are brought towards each other until they come into contact, the said closing movement causing compression of the blank (210) until the required shape of the second part is obtained;
g) separation of the support tool (60) and the third tool (55) and extraction of the assembly (300) of the two parts thus formed.

2. Method according to claim 1 modified in that step b) is replaced by the following steps:
b1) separation of the said first tool and the said second tool and extraction of the first part (5");
b2) placement of the first part (5") on a support tool (56) that has a contact surface (11") with the first part mechanically equivalent to the contact surface that existed between the first tool and the first part, the placement operation being done on the support tool such that the said common surface on the first part faces outwards and can act as a mould for the second part.

3. Method according to claim 1 or 2, being completed by the following final step:
h) complete cooling and stabilisation of the two plastic materials before the last mould removal phase of the second part (5, 5', 10") consisting of a relative displacement of one part (5, 5', 5") or a portion of a part relative to the other part (10, 10', 10").

4. Method according to any one of claims 1 to 3 in which the periphery of the first part is made of a first plastic material and the periphery of the blank is made of a second plastic material, immiscible with the first plastic material.

5. Method according to claim 4 in which the pair composed of the first and second plastic materials belongs to a pair of materials chosen from among polypropylene - polyethylene, polyester - polyethylene, polyester - polypropylene, polyamide - polypropylene, or polyamide - polyethylene.

6. Method according to any one of claims 1 to 5 in which the first part is moulded from a single material that is the first plastic material.

7. Method according to any one of claims 1 to 6 in which the blank is extruded from a single material that is the second plastic material.

8. Method according to any one of claims 1 to 6 in which the blank is obtained by coextrusion of several plastic materials, the second plastic material surrounding a plastic material with improved barrier properties, such as a copolymer (ethylene, vinyl alcohol) EVOH or a polyamide.

9. Method according to any one of claims 1 to 8 in which at least one of the plastic materials comprises a filler typically composed of calcium carbonate particles, mica particles or nanoparticles of clay such as montmorillonite.

10. Method according to any one of claims 1 to 9 in which the first or second plastic material comprises a sliding agent.

11. Method according to any one of claims 1 to 10 in which the first part is a tube head (10, 10') and the second part is a closure (5, 5').

12. Method according to any one of claims 1 to 10 in which the first part is a tube closure (5") and the second part is a tube head (10") , the third tool (45) is a punch around which a flexible skirt (101) is force fitted, the end (102) of the flexible skirt projects into the moulding cavity such that the plastic materials from which the head and the skirt are made are intimately welded together without the need to add any heat or material.

13. Method according to any one of claims 1 to 12 in which the second parts are continuously compression moulded from a blank between a mobile assembly comprising the first part fixed to the support tool and a third tool that is also free to move, the said moulding tools being continuously moved perpendicular to the direction of their closing movement.
